# EUROPEAN PATENT APPLICATION

(11) **EP 4 212 934 A1**
(43) Date of publication of application: **19.07.2023**
(21) Application number: 23151575.0
(22) Date of filing: 13.01.2023
(51) Int. Cl.: G02B 6/44

(54) **OPTICAL FIBER CABLE WITH EMBEDDED STRENGTH MEMBERS**

(30) Priority: 13.01.2022 IN 202211002107
(71) Applicant: Sterlite Technologies Limited, Haryana 122002 (IN)
(72) Inventor: Biju, Navaneeth, 122002 Gurugram (IN); Nath, Aparna, 122002 Gurugram (IN)
(74) Representative: Petraz, Gilberto Luigi

(57) **Abstract**

The present disclosure relates to an optical fiber cable (100, 200, 300) comprising one or more optical fibers (102), one or more buffer tubes (104), a first layer (106), a sheath (108), one or more embedded strength members (110), a plurality of water swellable yarns (112), a ripcord (114), a plurality of bundles of optical fibers (202) and a unitube (304). In particular, the core encloses the one or more optical fibers (102) encapsulated by one or more layers. Moreover, the sheath (108) encapsulates the core. Furthermore, the sheath (108) comprises one or more embedded strength members (110) coated with a hydrophobic material. Further, the thickness of the hydrophobic material coating is in a range of 20 microns to 100 microns. Additionally, contact angle between water and the one or more coated embedded strength member (110) is equal to or more than 100 degrees.

## Description

### TECHNICAL FIELD

Embodiments of the present disclosure relate to the field of optical fibers and more particularly, relate to an optical fiber cable with embedded strength members.

This application claims the benefit of Indian Application No. 202211002107 titled "Optical Fiber Cable With Embedded Strength Member" filed by the applicant on January 13, 2022 which is incorporated herein by reference in its entirety.

### BACKGROUND ART

Telecommunications networks include access networks where end-user subscribers connect to service providers. With the advancement of science and technology, various modern technologies are being employed for communication purposes. Over the last few years, there has been a rapid rise in the development and usage of networking technology. This is particularly the case in the field of optical fiber cables and their applications.

Being a critical component of a modern communication network across the globe, optical fiber cables are widely used for communication to meet the increasing demands. Optical fiber cables utilize optical fibers to transmit signals such as voice, video, image, data or information. Optical fibers are strands of glass fiber processed so that light beams transmitted through the glass fiber are subject to total internal reflection wherein a large fraction of the incident intensity of light directed into the fiber is received at the other end of the fiber.

The optical fiber cables consist of a number of optical fibers. An exemplary commercially available optical fiber cable that can find use in local distribution plant comprises a central (steel or polymer) strength member surrounded by a polyurethane jacket, a multiplicity of fiber-containing loose tubes stranded around the polyurethane jacket, polyester tape and a polyethylene inner jacket surrounding the tubes, and steel or Al armor and a polyethylene outer jacket surrounding the inner jacket.

The optical fibers may or may not be enclosed inside buffer tubes. The number of buffer tubes or optical fibers constitutes a core of the optical fiber cable. In addition, the core may be surrounded by one or more layers surrounded by a sheath. The sheath protects the optical fiber cable against any mechanical breakage. To prevent or reduce excessive bending, cable strength members may be disposed within a cable jacket or the sheath of the fiber optic cable along with the optical fibers. The strength members provide mechanical stability and stiffness to the optical fiber cable.

However, the strength members are prone to water penetration. A number of water droplets may pass through the gap between the embedded strength member and the sheath. The passage introduces moisture in the core or the enclosures of the optical fiber cable and reduces optical efficiency of the optical fiber cable. The water penetration reduces the efficiency of the optical fiber cable.

Water-blocking in optical-fiber buffer tubes and fiber optic cables typically has been accomplished by using petroleum-based filling gels (e.g., grease). By completely filling all of the free space inside a buffer tube that contains an optical fiber or optical-fiber bundle, the filling gel blocks the ingress of water into the fiber optic cable. Currently, SAP coated ARP is used to prevent water penetration. However, water swellable powders consist of finely ground hard particles and when exposed to and mixed with water, the surfaces of the cable components that come in contact with the water swellable agents can become slippery. Also, the situation may induce a piston effect in the embedded strength members. Moreover, the size and hardness of such particulates may be sufficient to cause microbending and optical attenuation in the optical fibers they contact.

There are a few patent applications that provide a method to reduce the penetration of water through the optical fiber cables. In a few instances, filler rods have been placed between the outer surface of the buffer tubes and the interior surface of the cable outer jacket to overcome the problem by plugging the gaps acting as water channels.

Poland patent application no. PL229143B1 titled "Antenna fiber-optic cable with increased resistance to the sunlight heat radiation" discloses a cable consisting of a centrally located plastic tube filled inside with a hydrophobic gel with optical fibers embedded in it.

Russian patent application no. RU196630U1 titled "Electro-optic cable" discloses an fiber-optic module with optical fibers in hydrophobic filler.

Chinese patent application no. CN103792630 titled "Dry-type optical cable" discloses that hydrophobic particles are filled between the outer sheath and the cable cores as well as between the cable cores and the center reinforcement member.

European patent application no. EP1411378A2 titled "Non-round filler rods and tubes with superabsorbent water swellable material for large optical cables" discloses a fiber optic cable having a plurality of buffer tubes and filler rods or filler tubes disposed between the inner surface of the outer jacket (1) of the fiber optic cable and the buffer tubes.

However, there are a number of drawbacks in the current technologies providing a method to reduce the penetration of water through the optical fiber cables. The prior arts provide a solution to prevent water penetration through the core of the optical fiber cable and not through the gap between strength members and sheath. While filler rods help close the interstitial gaps and prevent water penetration along the cable, the amount of water swellable material used is insufficient to plug the gaps or to properly protect the optical fibers, especially in the case of larger diameter cables with larger interstitial gaps. Moreover, the use of cores having round cross-sectional shapes minimizes the surface area to which the water swellable material is adhered.

Accordingly, to overcome the disadvantages of the prior arts, there is a need for a technical solution that overcomes the above-stated limitations in the prior arts. The present disclosure provides an optical fiber cable having embedded strength members with a coating of hydrophobic layer to prevent ingestion of water.

### SUMMARY OF THE DISCLOSURE

Embodiments of the present disclosure provide a an optical fiber cable comprising one or more optical fibers, a core and a sheath encapsulating the core. In particular, the core encloses the one or more optical fibers encapsulated by one or more layers. Moreover, the sheath comprises one or more embedded strength members. Furthermore, the one or more embedded strength members is coated with a hydrophobic material.

In accordance with an embodiment of the present disclosure, the hydrophobic material is one of perfluoroalkoxy (PFA), fluorinated ethylene propylene (FEP), ethylene tetrafluoroethylene (ETFE) and terapolymer (EFEP).

According to the first aspect of the present disclosure, the sheath is capable of passing a water penetration test, wherein a 1m water-head is applied to a 3 metre cable sample kept for at least 24 hours.

In accordance with an embodiment of the present disclosure, a contact angle between water and the one or more coated embedded strength member is equal to or more than 100 degrees.

In accordance with an embodiment of the present disclosure, a thickness of the hydrophobic material coating is in a range of 20 microns to 100 microns.

According to a second aspect of the present disclosure, the one or more embedded strength members are coated with the hydrophobic material by extrusion, vapour spray or passing through the liquid resin.

According to a third aspect of the present disclosure, the pulling force between the one or more embedded strength members and the sheath is greater than 0.1 N/mm².

According to a fourth aspect of the present disclosure, the hydrophobic material obtained by surface modification of a hydrophilic material using one of acetylation, metal oxide treatment, sol-gel process, modification with chlorosilanes, grafting of polymers, micro-emulsion, layer by layer deposition, plasma treatment and nanotechnology.

In accordance with an embodiment of the present disclosure, the one or more optical fibers is encapsulated by at least one of a buffer tube, loose tube, tight buffered tube, binder yarns, binder film, binder tape, water blocking tape.

In accordance with an embodiment of the present disclosure, the optical fiber cable further comprises one or more buffer tubes, a first layer, a plurality of water swellable yarns and a ripcord.

According to a fifth aspect of the present disclosure, , each of the one or more buffer tubes comprises the one or more optical fibers.

In accordance with an embodiment of the present disclosure, the optical fiber cable further comprises a core having a plurality of bundles of optical fibers. In particular, each bundle of the plurality of bundles of optical fibers comprises at least one intermittently bonded ribbon.

In accordance with an embodiment of the present disclosure, the at least one intermittently bonded ribbon comprises the one or more optical fibers.

In accordance with an embodiment of the present disclosure, the optical fiber cable further comprises a unitube. In particular, the unitube comprises the one or more optical fiber ribbons.

In accordance with an embodiment of the present disclosure, the diameter of each of the one or more optical fibers is in the range of 140 microns to 250 microns.

In accordance with an embodiment of the present disclosure, each of the one or more optical fibers comprises an inner core region and an outer cladding region. In particular, refractive index of the inner core region is greater than refractive index of the outer cladding region.

In accordance with an embodiment of the present disclosure, the one or more optical fibers is at least one of a loose fiber, a flat ribbon, a corrugated ribbon, an intermittently bonded ribbon.

In accordance with an embodiment of the present disclosure, the sheath has a thickness of at least 0.5 mm.

In accordance with an embodiment of the present disclosure, the sheath is made of a high density polyethylene (HDPE) jacket.

The foregoing solutions of the present disclosure are attained by providing an optical fiber cable with embedded strength members.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a cross-sectional view illustrating an exemplary optical fiber cable with with one or more embedded strength members in accordance with one embodiment of the present disclosure;
Fig. 2 is a cross-sectional view illustrating an exemplary optical fiber cable with 6 embedded strength members and a core having IBR bundles in accordance with one embodiment of the present disclosure;
Fig. 3 is a cross-sectional view illustrating an exemplary optical fiber cable with 2 embedded strength members and a unitube with one or more optical fibers in accordance with one embodiment of the present disclosure.

### REFERENCE LIST

Optical fiber cable - 100, 200, 300
One or more optical fibers - 102
One or more buffer tubes - 104
First layer - 106
Sheath - 108
One or more embedded strength members - 110
Plurality of water swellable yarns - 112
Ripcord - 114
Plurality of bundles of optical fibers - 202
Unitube - 304

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

### The following brief definition of terms shall apply throughout the present disclosure:

Optical fiber cable includes a plurality of fibers and carries information in the form of data between two places using light technology. The optical fiber cable 100 is a cable used for carrying light over long distances. Furthermore, the optical fiber cable 100 may simply be used to transmit optical signals which may carry sensor data or communication data.

A ribbon of fibers is made by placing a plurality of optical fibers parallel and joining the adjacent fibers partially or entirely with a matrix material.

Hydrophobic materials are non-polar in nature and have affinity for hydrocarbons. In particular, affinity is the electronic property of chemical species to form chemical compounds.

Contact angle is formed when a drop of liquid is placed on a material surface and the drop forms a dome shape on the surface. In particular, the contact angle refers to the angle formed between the surface and the line tangent to the edge of the drop of the water. As the drop of water spreads across a surface and the dome becomes flatter, correspondingly the contact angle becomes smaller.

Acetylation is an organic esterification reaction with acetic acid. The acetylation process introduces an acetyl functional group into a chemical compound.

Metal oxide treatment includes the treatment of the hydrophilic material with metal oxide polymer in nanocomposite form.

Sol-gel process is a method for producing solid materials from small molecules.

Modification with chlorosilanes includes reaction of silicon powder with methyl chloride gas through direct synthesis.

Grafting is a process in which monomers are covalently bonded and polymerized as side chains onto the main polymer chain.

Micro emulsions are clear, thermodynamically stable, isotropic liquid mixtures of oil, water, surfactant and cosurfactant.

Layer by layer deposition is a thin film fabrication technique. The films are formed by depositing alternating layers of oppositely charged materials with wash steps in between.

Plasma treatment includes increasing the wettability of any polymer.

Nanotechnology is the understanding and control of matter at the nanoscale, at dimensions approximately 1 to 100 nanometres.

Terms "IBR bundles 202" or "Plurality of bundles of optical fibers 202" are interchangeably used throughout the draft for convenience.

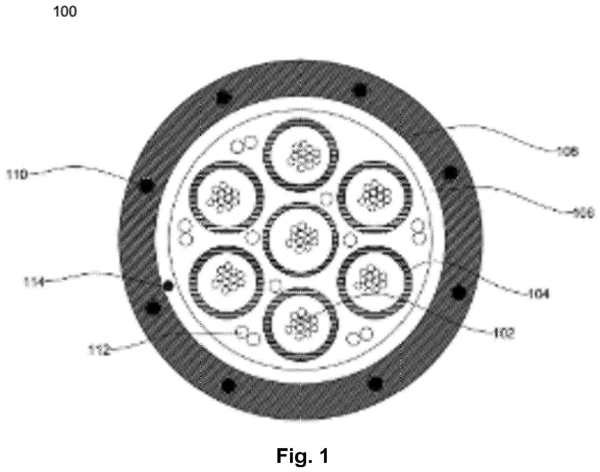

Referring to Fig.1 illustrates a cross-sectional view of an exemplary optical fiber cable 100 with one or more embedded strength members 110 in accordance with one embodiment of the present disclosure. The optical fiber cable 100 comprises one or more optical fibers 102, one or more buffer tubes 104, a first layer 106, a sheath 108, one or more embedded strength members 110, a plurality of water swellable yarns 112 and a ripcord 114.

In particular, the optical fiber cable 100 comprises a core and the sheath 108. The sheath 108 encapsulates the core and the core encapsulates one or more optical fibers 102. Moreover, the one or more optical fibers 102 are encapsulated by one or more layers. The optical fiber cable 100 is used for telecommunication applications, data centers and the like.

Furthermore, the one or more embedded strength members 110 are coated with a hydrophobic material.

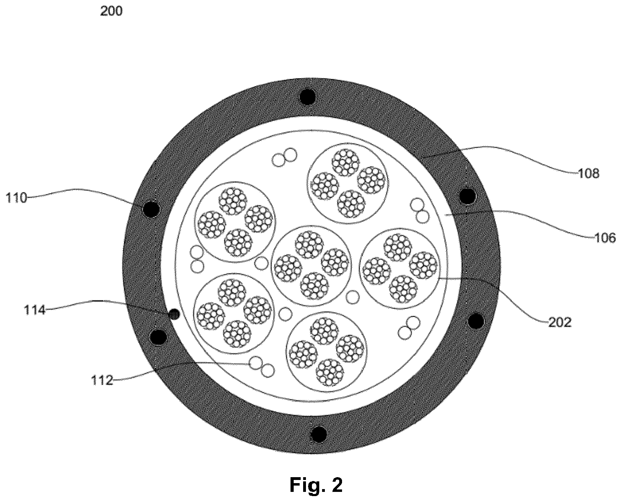

Fig. 2 is a cross-sectional view illustrating an exemplary optical fiber cable 200 with 6 embedded strength members 110 and a core having IBR bundles 202 in accordance with one embodiment of the present disclosure. The optical fiber cable 200 comprises a plurality of bundles of optical fibers 202, a first layer 106, a sheath 108, one or more embedded strength members 110, a plurality of water swellable yarns 112 and a ripcord 114.

In one embodiment, the optical fiber cable 200 comprises a core having IBR bundles 202. Alternatively, the core of the optical fiber cable 200 may or may not include the IBR bundles 202.

In accordance with an embodiment of the present disclosure, each bundle of the plurality of bundles 202 comprises at least one intermittently bonded ribbon. In particular, the intermittently bonded ribbon comprises the one or more optical fibers 102. The one or more optical fibers 102 are bonded intermittently with a matrix material to form the intermittently bonded ribbon.

In an embodiment of the present disclosure, a total of 6 plurality of bundles 202 are present in the optical fibre cable 200.Alternatively, the number of the plurality of bundles 202 in the optical fibre cable 200 may be more or less than 6.

In another embodiment, each of the plurality of bundles 202 comprises binders for binding multiple IBR bundles.

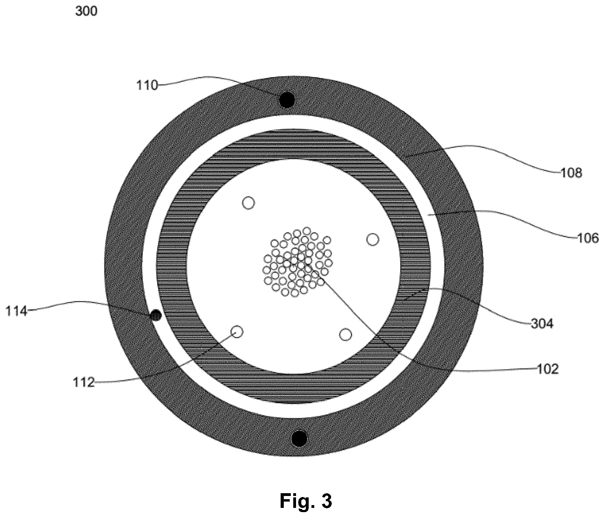

Fig. 3 is a cross-sectional view illustrating an exemplary optical fiber cable 300 with 2 embedded strength members 110 and a unitube 304 with one or more optical fibers 102 in accordance with one embodiment of the present disclosure. The optical fiber cable 300 comprises one or more optical fibers 102, a unitube 304, a first layer 106, a sheath 108, one or more embedded strength members 110, a plurality of water swellable yarns 112 and a ripcord 114.

In an embodiment, the unitube 304 comprises the one or more optical fiber ribbons 102.

In accordance with an embodiment of the present disclosure, the one or more optical fibers 102 extend longitudinally along a length of the optical fiber cable 100. In particular, the one or more optical fibers 102 is a fiber used for transmitting information as light pulses from one end to another. Each of the one or more optical fibers 102 is a thin strand of glass or plastic capable of transmitting optical signals. Moreover, the one or more optical fibers 102 are configured to transmit large amounts of information over long distances with relatively low attenuation.

Furthermore, each of the one or more optical fibers 102 includes a core region and a cladding region. The core region is an inner part of an optical fiber and the cladding section is an outer part of the optical fiber. Further, the core region is defined by a central longitudinal axis of each of the one or more optical fibers 102. And, the cladding region surrounds the core region. The core region and the cladding region are formed along the central longitudinal axis of each of the one or more optical fibers 102 during the manufacturing stage of each of the one or more optical fibers 102. Additionally, refractive index of the core region is greater than refractive index of the cladding region.

In accordance with an embodiment of the present disclosure, each of the one or more optical fibers 102 has a diameter in the range of 140-250 microns. Alternatively, the diameter of each of the one or more optical fibers 102 may vary.

In one embodiment, each of the one or more optical fibers 102 is a single mode fiber. Alternatively, each of the one or more optical fibers 102 is a multimode fiber.

In another embodiment, the one or more optical fibers 102 is at least one of a loose fiber, a flat ribbon, a corrugated ribbon and an intermittently bonded ribbon.

In accordance with an embodiment of the present disclosure, the optical fiber cable 100 comprises the one or more buffer tubes 104. Each of the one or more buffer tubes 104 encloses the one or more optical fibers 102.

In an exemplary example, each of the one or more buffer tubes 104 encloses 12 optical fibers. Alternatively, the one or more buffer tubes 104 may enclose any number of optical fibers. Particularly, each of the one or more buffer tubes 104 is a tube encapsulating the one or more optical fibers 102. Moreover, the one or more buffer tubes 104 provide support and protection to each of the one or more optical fibers 102 against crush, bend and stretch. Furthermore, the one or more buffer tubes 104 protect the one or more optical fibers 102 and prevent ingression of water inside.

In an embodiment, the one or more optical fibers 102 may be placed inside the one or more buffer tubes 104. Alternatively, the one or more fibers 102 may be bundled together using binder yarns, binder film, binder tape, water blocking tape to be placed inside the core of the optical fiber cable 100.

In an exemplary example of the present disclosure, the one or more buffer tubes 104 may be a bundle of a plurality of IBRs wound by one or more binders.

Further, the one or more buffer tubes 104 provide mechanical isolation, physical damage protection and identification of each of the one or more optical fibers 102.

In another embodiment, the one or more buffer tubes 104 provide a single layer core construction.

In accordance with an embodiment of the present disclosure, the optical fiber cable 100 comprises the one or more layers.

In an embodiment, the one or more layers include the first layer 106. Alternatively, the one or more layers may include more number of layers.

In accordance with another embodiment, the one or more layers include a single buffer tube that is a unitube surrounding the one or more optical fibers 102,

In yet another embodiment, the first layer 106 is made of binder yarns. In particular, the binder yarn is used for binding of the core of the optical fiber cable 100.

In yet another embodiment, the binder yarn is a polyester yarn. Alternatively, the binder yarn is made of any other suitable material. Moreover, the optical fiber cable 100 may include more layers in addition or in place of the first layer 106.

In accordance with an embodiment of the present disclosure, the optical fiber cable 100 comprises the sheath 108 surrounding the core.

In an embodiment, the sheath 108 surrounds the first layer 106.

In another embodiment, the sheath 108 is a high density polyethylene (HDPE) jacket. Alternatively, the sheath 108 may be made using any other suitable materials such as PE, MDPE, LDPE, PVC or LSZH. Moreover, the sheath 108 is characterized by a thickness of at least 0.5 mm. Alternatively, the thickness of the sheath 108 may vary.

In one embodiment, the sheath 108 is black in color. Alternatively, the sheath 108 may be of any color. The sheath 108 interacts directly with the ambient environment. Moreover, the sheath 108 is a jacketing layer that protects the optical fiber cable 100 against crush, bend and tensile stress along the length of the optical fiber cable 100.

In accordance with an embodiment of the present disclosure, the one or more embedded strength members 110 are embedded in the sheath 108 of the optical fiber cable 100.

In an embodiment, the one or more embedded strength members 110 lies substantially along a longitudinal axis of the optical fiber cable 100. Alternatively, the one or more embedded strength members 110 may not lie along the longitudinal axis. The one or more embedded strength members 110 provide tensile strength and stiffness to the optical fiber cable 100.

In another embodiment, the one or more embedded strength members 110 are made of a material selected from a group consisting of fiber reinforced plastic, aramid reinforced plastic, steel wire or any other desired material. Moreover, the one or more embedded strength members 110 are characterized by a diameter.

In one embodiment of the present disclosure, the one or more embedded strength members 110 has a diameter of about at least 0.5 mm. Alternatively, the diameter of the one or more embedded strength members 110 may vary.

In another embodiment, the number of the one or more embedded strength members 110 are 2. Alternatively, the number of the one or more embedded strength members 110 may be more than 2.

Further, the one or more embedded strength members 110 are coated with a hydrophobic material. The hydrophobic material prevents water ingression through the gaps between the one or more embedded strength members 110 and the sheath 108. Additionally, the water penetrates through the one or more embedded strength members 110 due to a capillary action and an external pressure head.

In one embodiment of the present disclosure, the sheath 108 with coated strength members 110 is capable of passing a water penetration test performed at 1m water-head applied to a 3 metre of cable sample kept for at least 24 hours. Alternatively, the water penetration test may be performed at different parameters.

Moreover, the capillary action is dominant over the pressure water head due to small pore size of the one or more embedded strength members 110. The dominant capillary action causes water penetration through the gap between the one or more strength members 110 and sheath 108.

In an embodiment, the capillary action is reduced by coating the hydrophobic layer over the one or more embedded strength members 110. Furthermore, the hydrophobic layer reduces the capillary action and the water penetration length.

The affinity to hydrocarbons further improves the bonding of the one or more embedded strength members 110 with a polyethylene (hydrocarbon) and reduces the penetration of water. In addition, the hydrophobic layer improves adhesion between the one or more embedded strength members 110 and the sheath 108. And, the hydrophobic layer includes a number of hydrophobic materials.

In an exemplary example, the hydrophobic materials comprises at least one of fluorinated ethylene propylene (FEP), ethylene tetrafluoroethylene (ETFE), perfluoroalkoxy (PFA), terapolymer (EFEP) and the like. Particularly, EFEP is a terapolymer composed of three materials - ethylene, tetrafluroethylene and hexafluoropropylene.

In an embodiment, the thickness of coating of the hydrophobic layer is in a range of 20-100 microns. Particularly, a thickness of below 20 microns makes the one or more embedded strength members 110 difficult to coat and maintain uniformity. Moreover, a thickness of above 100 microns makes the coating thick and requires high thickness of sheath for the one or more embedded strength members 110.

In another embodiment, the one or more embedded strength members 110 may be made of aramid reinforced plastic (ARP), fiber reinforced plastic (FRP), glass reinforced plastic (GRP) and other suitable material.

In accordance with an embodiment of the present disclosure, the contact angle between water and the coated one or more embedded strength members 110 is equal to or more than 100 degrees. Alternatively, the contact angle between water and the coated one or more embedded strength member 110 may be of any other value.

In an embodiment, the hydrophobic materials have a contact angle greater than 90 degrees. Particularly, the hydrophobicity increases with the increase in contact angle.

In an embodiment, the one or more embedded strength members 110 are coated with the hydrophobic material by extrusion, wiping or brushing, spraying or passing through liquid resin. The hydrophobic material is coated by extruding the hydrophobic material. Extruding includes pushing any material through a die of the desired cross section to create objects. Moreover, the hydrophobic material is coated by dipping the hydrophobic material in a liquid resin when the hydrophobic material is in dispersion form.

In accordance with an embodiment of the present disclosure, the pulling force between the one or more embedded strength members 110 and the sheath 108 is greater than 0.1 N/mm². In particular, the pulling is performed by fixing one end of a 1 metre cable sample and pulling the one or more embedded strength members 110 from the another open end.

In one embodiment, the hydrophobic material may be obtained by surface modification of a hydrophilic material using one of acetylation, metal oxide treatment, sol-gel process, modification with chlorosilanes and grafting of polymers. In particular, the hydrophobic material is obtained by micro emulsion, layer by layer deposition, plasma treatment and nanotechnology.

In another embodiment, the coating of the one or more embedded strength members 110 is applicable to IBR based optical fiber cables. Alternatively, the coating of the one or more strength members 110 may be applicable to any other cable with embedded strength members.

In accordance with an embodiment, the optical fiber cable 100 may or may not include the plurality of water swellable yarns 112. In particular, the plurality of water swellable yarns 112 may be positioned between the one or more buffer tubes 104. Moreover, the plurality of water swellable yarns 112 prevents ingression of water in the stranded core of the optical fiber cable 100.

In one embodiment, the number of the plurality of water swellable yarns 112 is 2. Alternatively, the number of the plurality of water swellable yarns 112 may vary.

In accordance with an embodiment of the present disclosure, the optical fiber cable 100 may include at least one of the central strength members. In particular, the central strength member is made of a fiber reinforced plastic. The fiber reinforced plastic is a composite material made of a polymer matrix reinforced with glass fibers. An exemplary example of the fiber reinforced plastic include glass fiber, carbon fiber, aramid fiber and the like. Alternatively, the central strength member is made of any suitable material.

In accordance with an embodiment of the present disclosure, the optical fiber cable 100 may or may not include the ripcord 114. Alternatively, the optical fiber cable 100 may include more ripcords. Moreover, the ripcord 114 is placed inside the sheath 108. The ripcord 114 lies substantially along the longitudinal axis of the optical fiber cable 100. Furthermore, the ripcord 114 facilitates stripping of the sheath 108.

In an embodiment, the ripcord 114 is made of a polyester material. Alternatively, the ripcord 114 is made of any suitable material. Moreover, the ripcord 114 has a circular cross-section.

In another embodiment, a single ripcord 114 may be present. Alternatively, the number of the ripcord 114 may vary.

The present disclosure of the optical fiber cable 100, 200, 300 with embedded strength members 110 provides a number of advantages. The present disclosure provides the optical fiber cable 100, 200, 300 with embedded strength members 110 coated with a hydrophobic layer. Moreover, the present disclosure enables prevention of water penetration through the optical fiber cable 100, 200, 300 with embedded strength members 110.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. An optical fiber cable (100, 200, 300) **characterized in that**:
one or more optical fibers (102);
a core, wherein the core encloses the one or more optical fibers (102) encapsulated by one or more layers; and
a sheath (108) encapsulating the core, wherein the sheath (108) comprising one or more embedded strength members (110), wherein the one or more embedded strength members (110) is coated with a hydrophobic material.

2. The optical fiber cable (100, 200, 300) as claimed in claim 1, wherein the hydrophobic material is one of perfluoroalkoxy (PFA), fluorinated ethylene propylene (FEP), ethylene tetrafluoroethylene (ETFE) and terapolymer (EFEP).

3. The optical fiber cable (100, 200, 300) as claimed in claim 1, wherein the sheath (108) is capable of passing a water penetration test, wherein a 1m water-head is applied to a 3 metre cable sample kept for at least 24 hours.

4. The optical fiber cable (100, 200, 300) as claimed in claim 1, wherein a contact angle between water and the one or more coated embedded strength member (110) is equal to or more than 100 degrees.

5. The optical fiber cable (100, 200, 300) as claimed in claim 1, wherein a thickness of the hydrophobic material coating is in a range of 20 microns to 100 microns.

6. The optical fiber cable (100, 200, 300) as claimed in claim 1, wherein the one or more embedded strength members (110) are coated with the hydrophobic material by extrusion, vapour spray or passing through the liquid resin.

7. The optical fiber cable (100, 200, 300) as claimed in claim 1, wherein a pulling force between the one or more embedded strength members (110) and the sheath (108) is greater than 0.1 N/mm².

8. The optical fiber cable (100, 200, 300) as claimed in claim 1, wherein pulling is performed by fixing one end of a 1m cable sample and pulling the one or more embedded strength member (110) from another open end.

9. The optical fiber cable (100, 200, 300) as claimed in claim 1, wherein the hydrophobic material obtained by surface modification of a hydrophilic material using one of acetylation, metal oxide treatment, sol-gel process, modification with chlorosilanes, grafting of polymers, micro-emulsion, layer by layer deposition, plasma treatment and nanotechnology.

10. The optical fiber cable (100, 200, 300) as claimed in claim 1, wherein the one or more optical fibers (102) is encapsulated by at least one of a buffer tube, loose tube, tight buffered tube, binder yarns, binder film, binder tape, water blocking tape.

11. The optical fiber cable (100) as claimed in claim 1, further comprising one or more buffer tubes (104), a first layer (106), a plurality of water swellable yarns (112) and a ripcord (114).

12. The optical fiber cable (100) as claimed in claim 1, wherein each of the one or more buffer tubes (104) comprises the one or more optical fibers (102).

13. The optical fiber cable (200) as claimed in claim 1, further comprising a core having a plurality of bundles of optical fibers (202), wherein each bundle of the plurality of bundles of optical fibers (202) comprises at least one intermittently bonded ribbon.

14. The optical fiber cable (200) as claimed in claim 1, wherein the at least one intermittently bonded ribbon comprises the one or more optical fibers (102).

15. The optical fiber cable (300) as claimed in claim 1, further comprising a unitube (304), wherein the unitube (304) comprises the one or more optical fiber ribbons (102).
